# EUROPÄISCHE PATENTSCHRIFT

(11) **EP 2 527 274 B1**
(45) Veröffentlichungstag und Bekanntmachung des Hinweises auf die Patenterteilung: **22.10.2014**
(21) Anmeldenummer: 12003973.0
(22) Anmeldetag: 22.05.2012
(51) Int. Cl.: B65G 1/04

(54) **Verfahren und Vorrichtung zur Steuerung eines schienengebundenen Transportroboters in einem Materiallager**
Method and device for controlling a rail-bound transport robot in a materials store
Procédé et dispositif de commande d'un robot de transport relié par rail dans un dépôt de matériel

(30) Priorität: 25.05.2011 DE 102011103130
(43) Veröffentlichungstag der Anmeldung: 28.11.2012
(73) Patentinhaber: SERVUS Intralogistik GmbH, 6850 Dornbirn (AT)
(72) Erfinder: Beer, Christian, 6858 Schwarzach (AT); Jungbluth, Volker, 44267 Dortmund (DE)
(74) Vertreter: Riebling, Peter

(56) Entgegenhaltungen:
- EP-A2- 0 133 472
- WO-A1-2008/136659
- DE-U1-202004 002 338
- FR-A1- 2 915 977
- US-A1- 2009 074 545
- ROODBERGEN K J ET AL: "A survey of literature on automated storage and retrieval systems", EUROPEAN JOURNAL OF OPERATIONAL RESEARCH, AMSTERDAM, NL, Bd. 194, Nr. 2, 16. April 2009 (2009-04-16), Seiten 343-362, XP025587626, ISSN: 0377-2217, DOI: 10.1016/J.EJOR.2008.01.038 [gefunden am 2008-02-05]

## Beschreibung

Die Erfindung betrifft ein Verfahren zur Steuerung eines schienengebundenen Transportroboters in einem Materiallager.

Ein eingangs genanntes Verfahren ist beispielsweise mit dem Gegenstand der DE 102007010191 A1 bekannt geworden. Bei diesem bekannten Verfahren besteht ein Materiallager aus unterschiedlichen Fahrgassen, wobei jeweils in der Fahrgasse eine Anzahl von Regalplätzen angeordnet sind und aus einer Anzahl von vertikal übereinander angeordneten und zueinander parallelen Regalebenen, in denen jeweils ebenfalls Fahrgassen mit zugeordneten Regalplätzen angeordnet sind.

Als Fördermittel werden Transportroboter verwendet, die in der jeweiligen Fahrgasse der jeweiligen Regalebene von einem Regalplatz zum anderen verfahrbar sind. Es handelt sich um schienengebundene Satellitenfahrzeuge, die jedoch nur im Materiallager selbst verfahrbar sind, weil an einer Stirnseite des Materiallagers ein Auslagerlift angeordnet ist, der die an diesem Auslagerlift anfallenden Transportkisten oder Transportbehälter aufnimmt und auf eine jeweilige Entnahmeebene fährt.

Nachteil des bekannten Verfahrens ist demzufolge, dass die Transportroboter nur jeweils im Materiallager selbst in den Fahrgassen verfahrbar sind, dass sie aber nicht für die Befahrung des Liftturms vorgesehen sind, weil der dort angegebene Liftturm lediglich die Transportbehälter selbst befordert.

Damit besteht aber der Nachteil einer geringen Umschlaggeschwindigkeit, weil jeweils immer nur ein einziger Transportroboter in einer Ebene in den Fahrgassen hin- und herfahren kann und jeweils nur zu dem einzigen stirnseitig angeordneten Liftturm seine Transportbehälter übergeben kann.

Wenn z. B. fünf Transportbehälter in einer Ebene zu entnehmen sind muss der jeweilige Transportroboter fünfmal in dieser Transportebene hin- und herfahren, um die jeweilige Kiste aufzunehmen und an dem stirnseitig angeordneten Liftturm zu übergeben.

Damit sind unerwünschte Leerfahrten verbunden. Es ist nicht vorgesehen, in einer Regalebene mehrere Transportroboter hintereinander liegend in der gleichen Fahrgasse zu befördern. Damit wird eine nur geringe Umschlaggeschwindigkeit erreicht.

Mit der EP0133472A2 wird ein Materiallager gezeigt, welches über zwei Liftturme verfügt. Die Lifttürme sind an beiden Enden des Materiallagers angeordnet und können Transportroboter zusammen mit deren Ladung auf einzelne Regalebenen anheben bzw. absenken. Die EP0133472A2 zeigt jedoch kein Verfahren, bei dem die Transportroboter in nur einer Fahrtrichtung durch das Materiallager fahren.

Mit der FR 2915977 wird insbesondere mit den Figuren 1 und 2 ein Materiallager gezeigt, welches über einen Liftturm verfügt. Die Druckschrift zeigt jedoch keine zwei Lifttürme, welche an den beiden entgegen gesetzten Enden des Materiallagers angeordnet sind. Eine Durchfahrt des Transportroboters durch das Materiallager ist daher mit der Lehre der FR 2915977 nicht möglich.

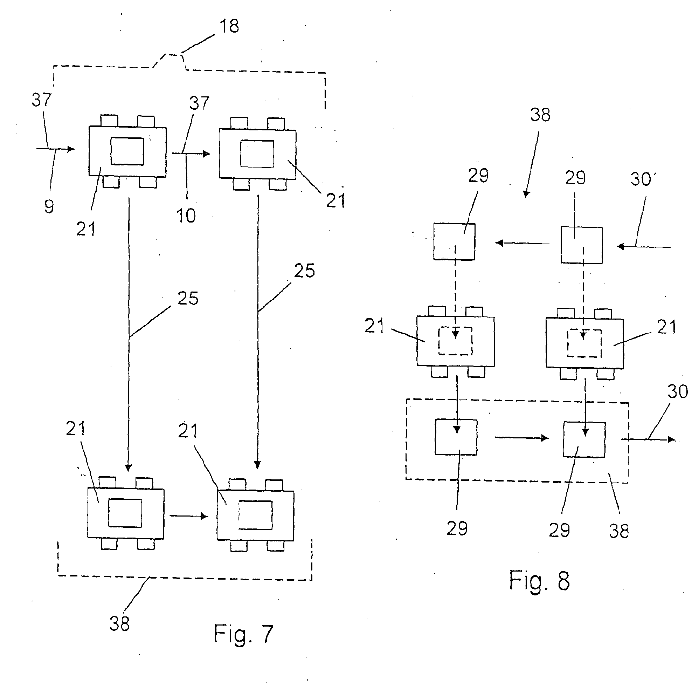

Mit der US 2009/0074545 A1 wird insbesondere mit der Figur 7 ein ebenes Materiallager gezeigt, bei dem ein autonomer Transportroboter durch ein Lager fährt. In Figur 8 wird gezeigt, dass der Transportroboter über Rampen, jeweils von einem höher gelegenen Stockwerk auf den Boden herab fahren kann. Mit der Lehre der Druckschrift ist es jedoch nicht möglich, dass der Transportroboter ausgehend von einer höheren Regalebene, welche sich z.B. im dritten Stock befindet, in eine Regalebene in einen ersten Stock verfahren werden kann. Dies wäre nur durch einen Lift möglich. Bei der US 2009/0074545 A1 kann der Transportroboter jeweils nur von der höheren Etage auf den Boden herab gefahren werden. Diese Art von Materiallagern sind sehr weitläufig und können nicht als Hochregallager verwendet werden, da der Transportroboter nur einen gewissen Steigungswinkel befahren kann.

Mit der Druckschrift WO2008/136659A1 wird eine Vorrichtung und ein Verfahren zum Lagern von Waren gezeigt. Die Druckschrift offenbart schienengebundene Transportroboter in einem Materiallager, wobei das Materiallager vertikal übereinander angeordnete und zueinander parallele Regelebenen enthält. An der Stirnseite des Materiallagers ist mindestens ein alle Regalebenen überspannenden Liftturm angeordnet ist, auf dem die Transportroboter im beladenen und unbeladenen Zustand auf die verschiedenen Regalebenen beförderbar sind. Durch den Einsatz von nur einem stirnseitigen Lift ist der Transportroboter gezwungen seine Fahrtrichtung in der Regalebene zu ändern, um wieder zurück zu dem Lift zu gelangen. Dies ist sehr zeitintensiv. Ein weiterer Nachteil besteht darin, dass die hinteren Lagerplätze nie richtig genutzt werden, da der Transportroboter, ausgehend von dem stirnseitigen Lift, stets einen langen Fahrweg innerhalb der Regalebene hat.

Wenn z.B. fünf Transportbehälter in einer Ebene zu entnehmen sind muss der jeweilige Transportroboter fünfmal in dieser Transportebene hin- und herfahren, um die jeweilige Kiste aufzunehmen und an dem stirnseitig angeordneten Liftturm zu übergeben.

Damit sind unerwünschte Leerfahrten verbunden. Es ist nicht vorgesehen, in einer Regalebene mehrere Transportroboter hintereinander liegend in der gleichen Fahrgasse zu befördern. Damit wird eine nur geringe Umschlaggeschwindigkeit erreicht.

Der Erfindung liegt deshalb die Aufgabe zugrunde ein Verfahren der eingangs genannten Art so weiterzubilden, dass die Umschlaggeschwindigkeit wesentlich erhöht wird.

Zur Lösung der gestellten Aufgabe ist die Erfindung durch die technische Lehre des Anspruches 1 gekennzeichnet.

Wesentliches Merkmal der Erfindung ist, dass jeweils stirnseitig an dem Materiallager alle Regalebenen überspannende Lifttürme angeordnet sind, auf denen die Transportroboter im beladenen und unbeladenen Zustand verfahrbar sind und dass einer Fahrgasse und einer Regalebene mehr als ein Transportroboter zugeordnet werden kann.

Bei der gegebenen technischen Lehre ergibt sich der wesentliche Vorteil einer schnelleren Umschlaggeschwindigkeit, denn die Umschlaghäufigkeit bei kurzen Zeitabschnitten wird wesentlich verbessert.

Beim Stand der Technik bestand der Nachteil darin, dass zwangsläufig mit der Einrichtung der Fahrtrichtung in einer einzigen Richtung das Problem entsteht, dass ausgehend von dem Liftturm, von dem ausgehend die Transportroboter in die Fahrgasse einfahren und die Regalplätze bedienen, jeweils nacheinander folgend die Regalplätze voll gefüllt werden. Hieraus ergibt sich, dass mit zunehmendem Beladungsverkehr am Ende der Fahrgasse sich mehr und mehr ungefüllte Regalplätze ausbilden, die nicht erreicht und befüllt werden.

Das Ziel der Erfindung ist demnach, dass in einer einzigen Strecke, d. h. in einer einzigen Fahrtrichtung in der Fahrgasse das Optimum dann erreicht wird wenn die Regalplätze von vorne nach hinten zunehmend aufgefüllt werden ohne das die Notwendigkeit besteht, dass der Transportroboter eine Rückwärtsfahrt ausführt und in diese Regalegasse zurückfahren muss. Es sollen also auch lange Fahrten in der Regalgasse vermieden werden, weil mit zunehmender Auffüllung der Lagerplätze nun das Phänomen entsteht, das zu Beginn der Fahrtgasse nun die Lagerplätze alle aufgefüllt sind und am Ende der Fahrgasse die Lagerplätze mit einer Vielzahl von Stellplätzen durch Leerplätzen besetzt sind.

Hier setzt die Erfindung ein, die vorsieht, dass für einen gewissen Zeitraum im Bereich von z. B. 5 Minuten bis 30 Minuten, d. h. also für einen definierten Zeitraum, die Fahrtrichtung genau in dieser Fahrtgasse gewechselt wird und die Fahrgasse nunmehr von dem anderen, gegenüberliegenden Liftturm befahren wird. Die sich zu Beginn dieser Fahrgasse angeordneten Leerplätze können nun sehr einfach nacheinander folgend aufgefüllt werden.

Damit wird vermieden, dass die Transporteinheit eine Leerfahrt durchführt und damit ist auch das später zu beschreibende "Schaukelprinzip" grundsätzlich beschrieben.

Das Erfindungsprinzip liegt darin, dass Leerfahrten dadurch vermieden werden, dass das Schaukelprinzip angewendet wird, d. h. dass bedarfsweise die Fahrtrichtung in der Fahrtgasse und Ebene entgegengesetzt gewählt wird, um das Phänomen der sich langsam ausbildenden Leerplätze am Ende der Fahrtstrecke zu vermeiden. Damit werden sinnlose Fahrten entgegen der Fahrstrecke vermieden

Der Nachteil einer notwendigen Rückwärtsfahrt liegt nämlich darin, das während der Rückwärtsfahrt die Fahrgasse für alle Transporteinheiten vollkommen gesperrt werden muss und für keinen anderen Transportroboter zugänglich ist, was mit einer wesentlichen Verschlechterung der Transportleistung verbunden ist, was vermieden werden soll.

Wenn nämlich eine solche Fahrtgasse erfindungsgemäß durch zwei Transportroboter beschickt wird, wird damit auch eine doppelte Transportkapazität erreicht und es ist nicht notwendig, die Fahrgasse zu sperren, wenn festgestellt werden sollte, dass eine Rückwärtsfahrt notwendig ist, denn nach dem erfindungsgemäßen Schaukelprinzip sind derartige Rückwärtsfahrten nicht mehr notwendig.

Wesentliches Merkmal der vorliegenden Erfindung sind folgende Verfahrensmerkmale:
1. Der jeweilige Transportroboter lädt nur in einer Regalebene ab.
2. Er nimmt in der gleichen Regalebene einen Transportbehälter auf.
3. Er kann in der Regalebene die Fahrtrichtung wechseln und damit Leerfahrten vermeiden.
4. Falls ein Transportroboter in der gleichen Ebene und der gleichen Fahrgasse nach dem Abladen keine neue Ladung aufnehmen kann, wechselt er in eine andere Regalebene.
5. Er fährt stets in der Fahrtrichtung, wo er Abladen kann, d. h. entweder zu dem einen oder anderen stirnseitig angeordneten Liftturm.
6. Jeweils an dem Liftturm, den der Transportroboter mit seiner Ladung befährt, erfolgt die Aufnahme einer neuen Ladung.

Damit besteht eine Vorrichtung zur Ausführung des Verfahrens darin, dass eingangs- und ausgangsseitig eines Materiallagers jeweils ein alle Regalebenen überspannender Liftturm mit einer Hubeinrichtung angeordnet ist, die geeignet ist, Transportroboter auf eine beliebige Regalebene zu bringen und dort in die jeweilige Fahrgasse der Regalebene zu entlassen und ferner, dass an jedem Liftturm eine Übergabestation angeordnet ist, welche Transportkisten zuführt und wahlweise die aus dem Materiallager auf den Transportrobotern geforderten Transportkisten abführt.

Hierbei ist es nicht lösungsnotwendig, das jeweils die Lifttürme bezüglich des Materiallagers und den dort angeordneten Fahrgassen einander gegenüber liegen. Es kann auch vorgesehen sein, dass das Materiallager mit seinen Fahrgassen um 180° umgebogen ist, sodass die beiden Lifttürme jeweils an der gleichen Seite des Materiallagers und jeweils wiederum eingangs- und ausgangsseitig jeder Fahrgasse angeordnet sind.

Wesentliches Merkmal der Erfindung ist, dass an jeder Regalebene ein frontseitiger und ein rückseitiger Lift mit einer dort angeordneten Sammel- und Entladestation angeordnet ist und das jeweilige Regalbediensystem, von dem mindestens ein jedoch auch mehrere in der Regalgasse verfahren können, die Möglichkeit hat, die Ware entweder an den frontseitigen Lift oder an den rückseitigen Lift zu entladen oder aufzunehmen.

Damit besteht der wesentliche Vorteil, dass die Umschlaggeschwindigkeit praktisch verdoppelt wird oder sogar vervielfacht wird, weil Leerfahrten vermieden werden.

Als Ausführungsbeispiel wird angegeben, dass ein Transportroboter an dem frontseitigen Lift ausgehend in die Regalgasse hinein fährt. Als weiteres Ausführungsbeispiel wird angegeben, dass der Transportroboter, welcher frontseitig in einem Lift auf einen Auftrag wartet, zunächst eine volle Kiste abgegeben hat und in der im Bereich des Liftes angeordneten Aufnahmestation eine leere Kiste aufgenommen hat. Der Transportroboter ist also nun mit einer leeren Kiste beladen und fährt in die vom Steuerungssystem angeforderte Ebene des Regalsystems hinein.

Es wird noch darauf hingewiesen, dass die von dem Transportroboter in die Regalgasse hinein zu schaffende Kiste nicht notwendigerweise leer sein muss. Sie kann auch eine Restmenge von Gegenständen aufweisen. Hierzu wird angegeben, dass die Entnahme von Gegenständen aus einer kommissionierten Kiste dadurch erfolgt, dass die Kiste mit einer Menge von z. B. 100 Stück aus dem Regalsystem entnommen wird, auf eine am Lift angeordnete Sammelstation verbracht wird und dort über eine beliebige Fördertechnik zum Kommissionierplatz befördert wird.

Aus der Kiste werden am Kommissionierplatz z. B. 20 Teile entnommen und die um 20 Teile entleerte Kiste (die z. B. noch 80 Teile enthält) wird vom Kommissionierplatz mit einem beliebigen Fördermittel zu dem Sammelplatz in der Nähe des Liftes verbracht und dort übernimmt der Transportroboter oder die Transporteinheit wiederum die nun um 20 Teile entleerte Kiste, um diese wiederum an ihren Stellort in einer bestimmten Ebene des Regalsystems zu verbringen.

Dementsprechend nimmt also die Transporteinheit die kommissionierte Kiste auf, fährt mit dem Lift nach oben und gelangt in die ihm zugeordnete Regalebene. Dort fährt die Transporteinheit in die Regalebene hinein an dem ihm zugewiesenen Stellplatz und entlädt die Kiste an den dort zugewiesenen Stellplatz.

Nunmehr ist die Transporteinheit leer. In dieser gleichen Ebene wird eine andere Kiste aufgenommen, sofern das Steuerungssystem dies anfordert.

Bei den geforderten hohen Umschlaggeschwindigkeiten wird also davon ausgegangen, dass stets noch ein weiterer Lade- oder Entladeauftrag in der gleichen Regalebene vorliegt, die von der Transporteinheit zu bewältigen ist,

Auf Grund des der Transporteinheit zugeordneten Steuerungsauftrages übernimmt die Transporteinheit nun eine weitere Kiste, die zu kommissionieren ist.

Wichtig ist nun, dass die Transporteinheit nicht mehr zurück zu dem frontseitigen Lift fährt und die weitere Kiste verarbeitet, sondern dass die Transporteinheit lediglich in einer einzigen Fahrtrichtung verkehrt, nämlich jede Regalebene wird als Einbahnstraße definiert und demzufolge fährt die Transporteinheit zu dem rückwärtigen Lift und fährt mit dem Lift nach unten zu der im Fußbereich des Liftes angeordneten Sammelstation, um dort die Kiste auf ein beliebiges Transportmedium zu übergeben, die vorstehend bereits schon beschrieben wurde.

Wichtig ist nun, dass nach der Abladung einer Kiste und der Aufnahme einer weiteren Kiste, die in einer anderen Regalebene abzustellen ist, die Transporteinheit in die andere Regalebene fährt, wobei jede Regalebene als Einbahnstraße definiert wird.

Dies bedeutet, dass z. B. abwechselnd die übereinander liegenden Regalebenen einmal als links zu rechts befahrende Einbahnstraße und andererseits die darunter liegende Regalebene als rechts zu links befahrbare Einbahnstraße definiert werden.

Hierauf ist die Erfindung jedoch nicht beschränkt. Es kann vorgesehen sein, dass beispielsweise drei Regalebenen von links nach rechts befahrbar sind, während die darunter liegenden drei Regalebenen von rechts nach links befahrbar sind.

Wichtig ist also die Tatsache, dass die Regalebenen oder die Fahrgassen jeweils als Einbahnstraßen definiert sind und dass Kraft einer Verkehrsregelung für das Regalbediensystem nur möglich ist, die Regalebene in einer einzigen Richtung zu durchfahren.

Diese Einbahnregelung wird jedoch nicht strikt angewendet, denn es ist durchaus möglich in einer Regalgasse den Befehl zu geben, dass die Regalbedieneinheit in der Regalgasse vorwärts und rückwärts fährt. Beispielsweise kommt es zu dem Betriebsfall, dass die Regalbedieneinheit in der Regalgasse bereits schon eine Kiste aufgenommen hat und an einem Platz vorbeigefahren ist, wo noch eine weitere Kiste aufzunehmen gewesen wäre. In diesem Fall sorgt die Steuerungstechnik dafür, dass das Regalbediensystem die Kiste - sofern dies vom Steuerungssystem gefordert wird - in der gleichen Regalebene abstellt, dann leer zurückfährt (in der gleichen Regalebene) und dort eine Kiste wieder aufnimmt und dann endgültig mit dieser Kiste zu dem fußseitig des Liftes angeordneten Sammelplatz fährt.

Die Einbahnregelung nach der Erfindung ist also nicht so strikt zu sehen, dass Rückwärtsfahrten überhaupt verboten sind, sondern es werden Rückwärtsfahrten dann erlaubt, wenn innerhalb der gleichen Transportebene noch eine weitere Kiste abzuholen oder abzuladen wäre.

Das endgültige Verlassen der Fahrtebene erfolgt jedoch immer nur in einer Richtung.

Damit ist der Vorteil verbunden, dass es nun auf Grund der Einbahnregelung erstmals möglich ist, in einer Transportebene eine Regelgasse mehrere Transporteinheiten hintereinander starten und durchfahren lassen zu können, was bisher nicht der Fall war.

Wenn also eine hohe Umschlaggeschwindigkeit in einer Regalebene gefordert ist, ist vorgesehen, dass nach dem Einfahren der ersten Transporteinheit in die Regalebene nun direkt dahinter eine zweite Transporteinheit in die gleiche Regalebene einfährt und weitere Kommissioniervorgänge vornimmt und dass dann beide Regalbedieneinheiten die Regalebene hintereinander folgend in der einzigen, dort zugelassenen Fahrtrichtung verlassen und auf dem jeweils zugeordneten Lift auffahren und dort zum Sammelplatz verfahren.

Damit ist es möglich, dass zur gleichen Zeit mehrere Regalbediensysteme in einer Transportebene arbeiten können, was bisher nicht möglich war. Es wird auch jede Leerfahrt vermieden, weil er stets in einer Regalebene eine Kiste aufnehmen oder absetzen kann und sofort die nächste Kiste wieder aufnimmt und zu dem fußseitig am Lift angeordneten Sammelplatz verfährt. Sollte dann ein weiterer Transportauftrag ergehen, wird er von dieser Liftstelle ausgehend in eine andere Regalgasse hineinfahren und auf einer in zugelassener Transportebene - die dann in der Einbahnrichtung anders ist als die vorher genannte Transportebene - wiederum eine Kiste aufnehmen oder abgeben, was mit einer Vervielfachung der Umschlaggeschwindigkeit verbunden ist.

Dadurch werden Leerfahrten vermieden.

Mit dem Begriff "Schaukeln", der bei der vorliegenden Erfindung die Arbeitsweise der verschiedenen Transporteinheiten schildern soll, wird verstanden, dass bezogen auf zwei Transporteinheiten die eine Transporteinheit in die eine Transportebene einfährt und die andere Transporteinheit in die z. B. darüber liegende oder darunter liegende Transportebene einfährt. Unter dem Begriff "Schaukeln" wird hierbei verstanden, dass die Einregalgasse mit der zugeordneten Transportebene in der einen Richtung durchfahren wird und die Transporteinheit dann von dem anderen gegenüberliegenden Sammelplatz ausgehend und dem gegenüberliegenden Lift eine andere Regalgasse mit einer anderen Transportrichtung in der entgegen gesetzten Richtung durchfährt. So kann durch Transportpfeile angegeben werden, dass es sich um gegenläufige Transportbewegungen handelt, die von der gleichen Regalbedieneinheit ausgeführt werden.

Dies ist ein wesentlicher Unterschied zum Stand der Technik, weil beim Stand der Technik ist es lediglich vorgesehen, dass in die gleiche Transportebene eine Transporteinheit hineingeschickt wird und in der entgegen gesetzten Richtung herausfährt, was mit einer Leerfahrt verbunden ist, die bei der vorliegenden Erfindung vermieden wird.

Eine Leerfahrt entsteht beim Stand der Technik dann, wenn in dieser Ebene nichts zu holen ist, d. h. nichts abzuladen oder nichts abzuholen ist, dann ist die Transporteinheit gezwungen, eine Leerfahrt auszuführen, was bei der vorliegenden Erfindung auf jeden Fall vermieden wird.

In einer Weiterbildung der Erfindung ist vorgesehen, dass in einem Transportlift zwei oder mehrere übereinander liegende Transporteinheiten angeordnet sind, so dass mit dem übereinander angeordneten Transporteinheiten es möglich ist, zum gleichen Zeitpunkt verschiedene Transportebenen zu befahren.

In einer anderen Ausgestaltung der Erfindung ist es vorgesehen, dass lediglich eine einzige Liftplattform vorhanden ist und dass auf dieser Liftplattform zwei oder mehrere Transporteinheiten parallel und nebeneinander in gleicher Ebene angeordnet sind, so dass beispielsweise beim Anhalten der Lifteinheit an der ersten Transportebene die erste Transporteinheit in diese Transportebene einfährt und dass dann die Liftplattform zur weiteren Transportebene fährt und dort die zweite Transporteinheit die auf der Transportplattform angeordnet ist, in die Transportebene hineinfahren lässt.

Es werden also beide Ausführungen als erfindungswesentlich beansprucht, wobei in der ersten Ausführungsform die Transporteinheiten vertikal übereinander liegend in der Liftplattform angeordnet sind, während in der anderen Ausführungsform die Transporteinheiten nebeneinander liegend auf einer einzigen Transportplattform angeordnet sind.

Selbstverständlich ist es nach einer Weiterbildung der Erfindung möglich, auch mehrere Transportplattformen als Lift zu verwenden, wobei auf jeder Transportplattform entweder nebeneinander liegende oder übereinander liegende Transporteinheiten angeordnet sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert die Seitenansicht eines Materiallagers mit insgesamt neun verschiedenen Regalebenen.
- Figur 2:: Die Stirnansicht der Ausführung nach Figur 1 in Richtung des Pfeils II in Figur 1.
- Figur 3:: Die Draufsicht auf die Anordnung nach Figur 1 in Pfeilrichtung III.
- Figur 4:: Ein erster Teil eines Ablaufdiagramms mit dem Materialfluss in der Übergabestation.
- Figur 5:: Der zweite Teil des Materialflusses beim verlassen des Liftturm.
- Figur 6:: Der dritte Teil des Materialflusses beim auf- und abladen in den Fahrgassen und Regalebenen.
- Figur 7:: Der vierte Teil des Materialflusses beim befahren des Liftturmes.
- Figur 8:: Der fünfte Teil des Materialflusses an der Übergabestation.
- Figur 9:: Schematisiert der Fahrweg eines einzelnen Transportroboters in unterschiedlichen Regalebenen.
- Figur 10:: Die Darstellung, dass gem. der Figur 9 auch eine Vielzahl von Transportrobotern hintereinander folgend eine einzige, gleiche Fahrgasse in einer Regalebene befahren können.
- Figur 11:: Schematisiert dreidimensional die Darstellung einer Vielzahl von Transportrobotern, die verschiedene Fahrgassen und Ebenen im Materiallager verfahren.
- Figur 12:: Schematisiert den Materialfluss und den Fahrweg eines Transportroboters beim Befahren unterschiedlicher Regalebenen im Materiallager.
- Figur 13:: Eine gegenüber den Figuren 1-12 abgewandelte Ausführungsform, bei der schematisiert dargestellt ist, dass die Lifttürme mit den Hubförderern auch an der gleichen Seite des Materiallagers angeordnet sein können.

Ein Materiallager 1 besteht aus insgesamt 9 Regalebenen 9, 10, 11, 12, 13, 14, 15, 16, wobei jedoch der Einfachheit halber nur die Regalebenen 9-16 zeichnerisch bezeichnet sind.

Jeder Regalebene 9-16 ist eine Fahrebene zugeordnet, wobei der Einfachheit halber in der Zeichnung nur fünf Fahrebenen 32-36 angegeben sind.

Es wird darauf hingewiesen, dass die Regalebene jeweils mit der Fahrebene zusammen fällt, weil der Transportroboter 26, 27 stets in seiner Fahrebene 32-36 sich in einer Regalebene 9-16 bewegt.

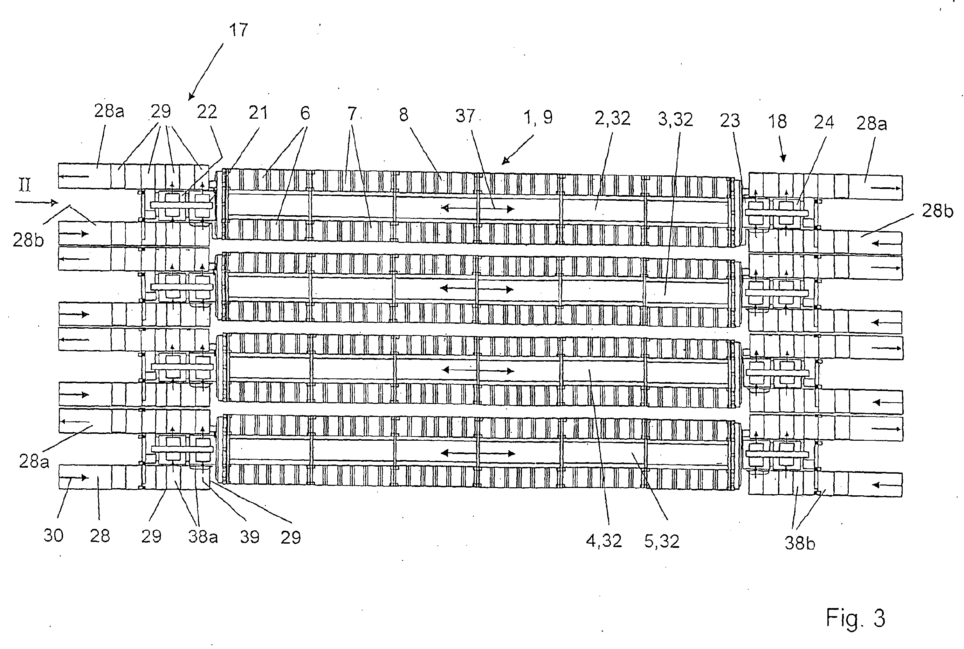

In Figur 3 ist beispielsweise die Draufsicht auf die oberste Regalebene 9 dargestellt und es ist erkennbar, dass dieser Regalebene (und allen weiteren Regalebenen) eine Anzahl von parallel zueinander angeordneten Fahrgassen 2, 3, 4, 5 zugeordnet sind.

Die Anzahl der parallelen Fahrgassen 2-5 ist beliebig.

Es kann auch nur eine einzige Fahrgasse vorhanden sein oder viel mehr als die hier dargestellten vier Fahrgassen.

Der jeweilige Transportroboter 26, 27 bewegt sich somit in den Pfeilrichtungen 37 in der jeweiligen Fahrgasse 2-5 und beschickt dort seitlich neben den Fahrgassen 2-5 angeordnete Regalplätze 6, 7, wobei der Einfachheit halber die Regalplätze links und rechts der jeweiligen Fahrgasse 2-5 angeordnet sind. Der Transportroboter 26, 27 kann also nach links oder nach rechts in den jeweiligen Regalplatz 6, 7 von seiner Fahrgasse 2 aus die Transportbehälter 29 verteilen. Dies heißt, er kann an dem jeweiligen Regalplatz 6, 7 einen Transportbehälter aufnehmen oder dort abladen.

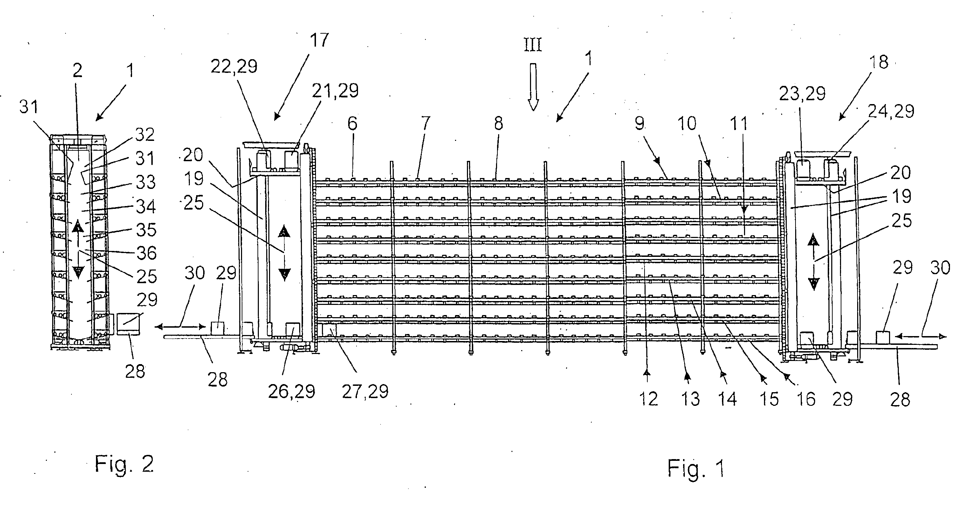

Wichtig nach der Erfindung ist gem. Figur 1, 2 und 3, dass jeweils eingangs- und ausgangsseitig des Materiallagers ein Liftturm 17, 18 angeordnet ist, der aus einer Hubsäule 19 und einer daran heb- und senkbar angeordneten Hubplattform 20 besteht, die geeignet ist, einen oder zwei Transportroboter 21, 22 (siehe Figur 1) parallel zu fördern.

Selbstverständlich ist der jeweilige Liftturm 17, 18 nicht darauf beschränkt, zwei Transportroboter 21, 22 parallel und gleichzeitig aufzunehmen und zu befördern.

Es kann auch vorgesehen sein, dass nur ein einziger Transportroboter 21 in dem Liftturm 17, 18 in den Pfeilrichtungen 25 förderbar und in die Regalebenen 9, 16 verfahrbar ist und es kann in einer anderen Ausgestaltung vorgesehen sein, dass auch mehr als zwei Transportroboter 21-24 in dem jeweiligen Liftturm 17, 18 heb- und senkbar und auch verfahrbar aufgenommen sind.

Ferner ist wesentlich bei der vorliegenden Erfindung, dass jeweils der Liftturm 17, 18 auf einer bestimmten Ebene, z.B. der Bodenebene oder einer beliebigen anderen, darüber liegenden Ebene mit einer Übergabestation 38 verbunden ist, welche im Wesentlichen aus einem Längsförderer 28a, 28b besteht, der die zu transportierenden Transportbehälter 29 beispielsweise in Pfeilrichtung 30 heran transportiert (siehe Figur 3), wobei in dieser Übergabestation die Transportbehälter 29 in der in Figur 3 eingezeichneten Pfeilrichtung auf die zwei zueinander parallelen Transportroboter 21, 22 übergeben werden und gleichzeitig die beladenen Kisten von dem Transportroboter auf die sich daran anschließende weitere Übergabestation 28a übergeben wird und dort abtransportiert wird.

Jeder Fahrgasse 2-5 ist deshalb eine Übergabestation mit einer Möglichkeit zur Aufnahme der Transportbehälter und gleichzeitig zur Abgabe der Transportbehälter zugeordnet.

Dies gilt natürlich auch für den jeweils zugeordneten Liftturm 17, 18, weil dieser entsprechend den Regalebenen und den zu versorgenden Fahrgassen 2-5 jede Fahrgasse 2-5 in jeder Regalebene 9-16 beschicken muss, so dass also jeder Fahrgasse mindestens auf einer Regalebene eine Übergabestation zugeordnet ist, die geeignet ist, über einen Längsförderer die Transportbehälter dem Transportroboter zuzuführen und die gleichzeitig geeignet ist, die auf dem jeweiligen Transportroboter lagernden Transportbehälter wieder über einen anderen Längsförderer abzuführen.

Hierbei kann es vorgesehen sein, dass der Transportroboter 21-24 selbsttätig von sich aus mit seiner eigenen autonomen Steuerung die Transportbehälter von dem Längsförderer 28 übernimmt und sich selbst belädt oder es kann in einer anderen Ausgestaltung vorgesehen sein, dass der jeweilige Transportroboter die Transportbehälter über externe Faktoren ablädt.

Es ist also ein aktiver Entlade- und Beladebetrieb möglich, als auch ein passiver Entlade- und Beladebetrieb.

Die Figur 2 zeigt, dass mit der erfindungsgemäßen Hubplattform 20 in dem jeweiligen Liftturm 17, 18, welche in Pfeilrichtung 25 verfahrbar ist, jede beliebe Regalebene und somit auch jede beliebige Fahrebene 32-36 (siehe Figur 2) ansteuerbar ist. Jede Fahrebene 32-36 besteht hierbei aus einwärts gerichteten Fahrschienen 31, von denen jeweils in Figur 2 nur die Stirnseiten erkennbar sind und auf diesen nach innen gerichteten Stirnseiten sitzt der Transportroboter 21-24 mit seinen Fahrrollen auf und ist senkrecht zur Papierebene der Figur 2 in dieser verfahrbar.

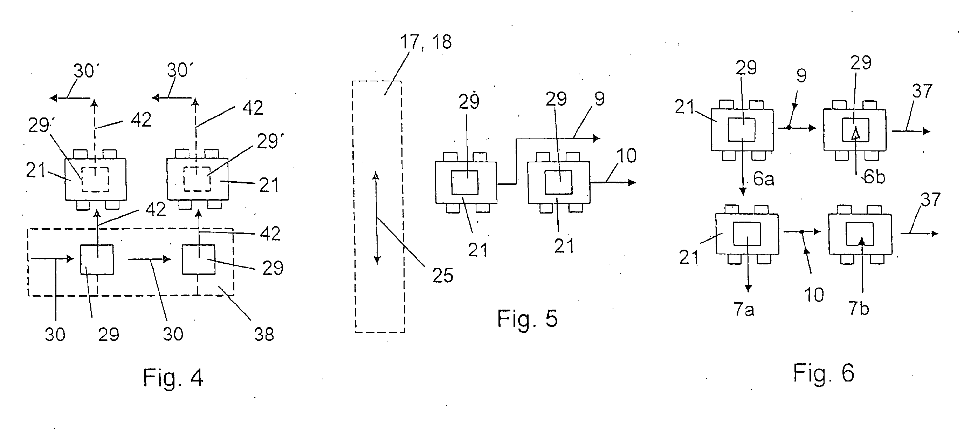

In den Figuren 4 bis 8 wird zeitlich nacheinander folgend ein Beladen und Entladen eines Transportbehälters auf einem Transportroboter dargestellt.

In Figur 4 ist die Übergabestation 38 dargestellt, wobei in Pfeilrichtung 30 die Transportbehälter 29 herangeführt werden und dort gelagert werden. Sie werden in Pfeilrichtungen 42 entweder über einen externen Faktor oder über einen Transportroboter gebundenen Greifer am Transportroboter 21 in Pfeilrichtung 42 aufgeladen, wobei gleichzeitig die bereits schon auf dem Transportroboter 21 lagernden Transportbehälter 29 - in Pfeilrichtung 42 abgeführt und in Pfeilrichtung 30 - auf einen anderen Längsförderer der Übergabestation abtransportiert werden.

Weil die Übergabestation 38 sowohl eine Beladung als auch eine Entladung vorsieht handelt es sich also um zwei gegenläufig zueinander bewegbare Längsförderer.

In Figur 5 ist der zeitliche Ablauf nach der Beladung des Transportroboters 21 mit den Transportbehälter 29 gezeigt.

Mit dem Liftturm 17, 18 deren Hubplattform 20 in Pfeilrichtung 25 bewegbar ist, werden die beiden parallel zu betreibenden Transportroboter 21 auf verschiedene Regalebenen verbracht, wobei z.B. der linke Transportroboter 21 in die Regalebene 9 und der Transportroboter 21 darunter liegend auf die Regalebene 10 verbracht wird.

Dort befährt der jeweilige Transportroboter die jeweilige Regalebene und dort eine bestimmte Fahrgasse.

Er wird also mit Hilfe des Liftturms 17 auch nicht nur in die jeweilige Regalebene 9-16 verzweigt, sondern auch noch in die jeder Regalebene zugeordneten Fahrgassen 2-5.

In Figur 6 ist nun die Ankunft am Regalplatz dargestellt, wo erkennbar ist, dass der obere Transportroboter 21 seinen Transportbehälter 29 senkrecht zu seiner Fahrtrichtung in einem Regalplatz abstellt, wobei der Regalplatz z. B. der Platz 6a ist.

Er fährt kurzzeitig in der gezeichneten Pfeilrichtung weiter und nimmt von dem Regalplatz 6b einen Transportbehälter 29 auf und fährt dann in Pfeilrichtung 37 weiter.

Gleiches gilt für den in der Regalebene 10 verfahrbaren Transportroboter 21, der ebenfalls von einem Regalplatz 7a den Transportbehälter ablädt und von einem Regalplatz 7b einen Transportbehälter aufnimmt und dann in Pfeilrichtung 37 in der ihm zugewiesenen Fahrgasse weiterfährt.

Gemäß Figur 7 kommen nun die beiden beladenen Transportroboter 21 auf unterschiedlichen Regalebenen 9, 10 in dem stirnseitig angeordneten Liftturm 18 und werden gleichzeitig in Pfeilrichtung 25 nach unten in den Bereich der Übergabestation 38 gefahren, wie dies Figur 7 zeigt.

Figur 8 zeigt nun wieder den Vorgang des Entladens und Beladens der Transportroboter, wie dies bereits schon anhand der Figur 4 dargestellt wurde, die somit dann wiederum fertig beladen sind und gemäß Figur 4 ihren weiteren Fahrweg über den Liftturm 17 nach Figur 5 und eine belade und entlade Aktion nach Figur 6 ausführen.

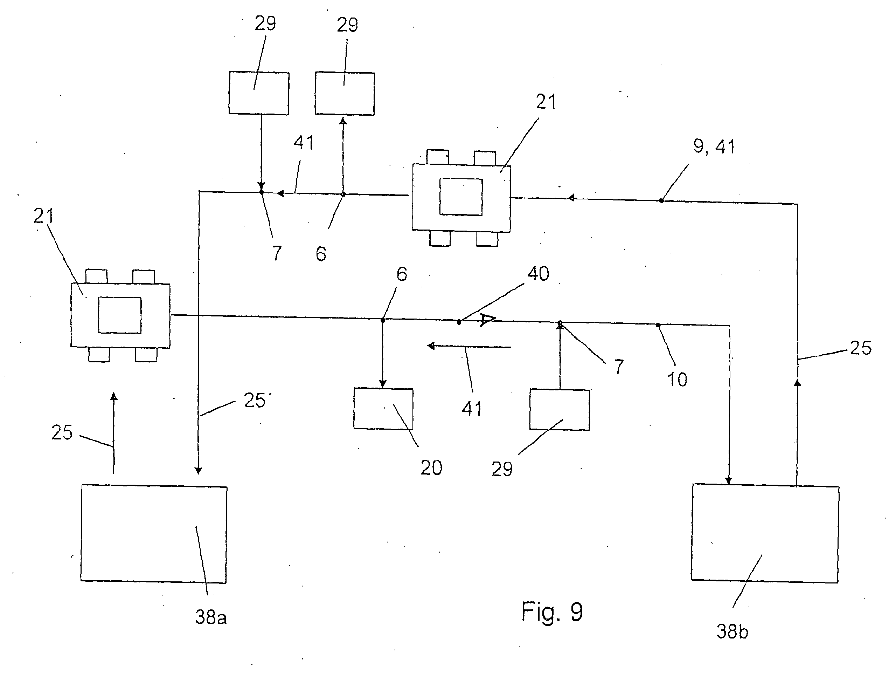

Die Figur 9 zeigt nun schematisiert den Fahrweg von 2 Transportrobotern 21, die auf unterschiedlichen Regalebenen 9, 10 verfahren.

Wichtig hierbei ist, dass Leerfahrten vermieden werden, wie anhand der Figur 9 näher erläutert wird.

Auf der linken Seite der Figur 9 wird der Transportroboter 21 zunächst in Pfeilrichtung 25 nach der Beladung in die Übergabestation 38 angehoben und in seine Regalebene 10 verfahren, wo er eine bestimmte dort angeordnete Regalgasse 2-5 befährt.

An der ersten Position wird am Regalplatz 6 die Transportkiste 29 entladen und der nun leere Transportroboter fährt in Transportrichtung 40 zu einem in der gleichen Fahrgasse angeordneten weiteren Regalplatz 7 weiter, wo er eine Transportkiste 29 aufnimmt.

Nach der Aufnahme dieser Transportkiste gibt es nun verschiedenen Möglichkeiten.

Es wird hierbei in einer ersten Ausführungsform bevorzugt, wenn er in Transportrichtung 40 weiter fährt und seine am Regalplatz 7 aufgenommene Transportbehälter 29 in der Übergabestation 38b ablädt. Auf diese Weise wird dafür gesorgt, dass alle Transportroboter 21 in der gleichen Transportrichtung 40 jeweils in der Fahrgasse fahren.

In Sonderfällen kann es jedoch vorkommen, dass die Fahrtrichtung umgekehrt wird und dass nach der Aufnahme eines Transportbehälters 29 am Regalplatz 7 die Transportrichtung 41 - im Gegensatz zur Transportrichtung 40 - angenommen wird wenn z. B. der Aufnahmeplatz hinter dem Abgabeplatz liegt.

Auf diese Weise kann also auch der jeweilige Transportroboter in den Regalgassen auf jeder beliebigen Regalebene hin und her fahren zwar nur einmal, um möglichst eine Leerfahrt zu vermeiden.

Ein solcher Wechsel der Transportrichtung kommt dann vor, wenn der mit einem Transportbehälter beladene Transportroboter den Aufnahmeregalplatz passieren muss, um an einer anderen Stelle den auf ihn lagernden Transportbehälter abzuladen und erst nach erfolgter Abladung kann er dann in der Gegenrichtung den Transportbehälter aufnehmen, der in dem Regalplatz angeordnet ist.

Die Figur 9 zeigt das Verfahren eines Transportroboters 21 in der darüber liegenden Regalebene 9, wo erkennbar ist, dass hier die Transportrichtung 41 als "bevorzugte Einbahnstraße" eingeschlagen wird, d. h. von Übergabestation 38b erfolgt ein Hub in Pfeilrichtung 25 in die Regalebene 9 und die Transportrichtung 41 führt den Transportroboter 21 dann zu dem Regalplatz 6, wo er eine Transportkiste 29 abgibt und er dann in Transportrichtung 41 zu dem dahinter liegenden Regalplatz 7 fährt, wo er einen Transportbehälter 29 aufnimmt und dann in Pfeilrichtung 25 den aufgenommenen Transportbehälter 29 in der Übergabestation 38a abgibt.

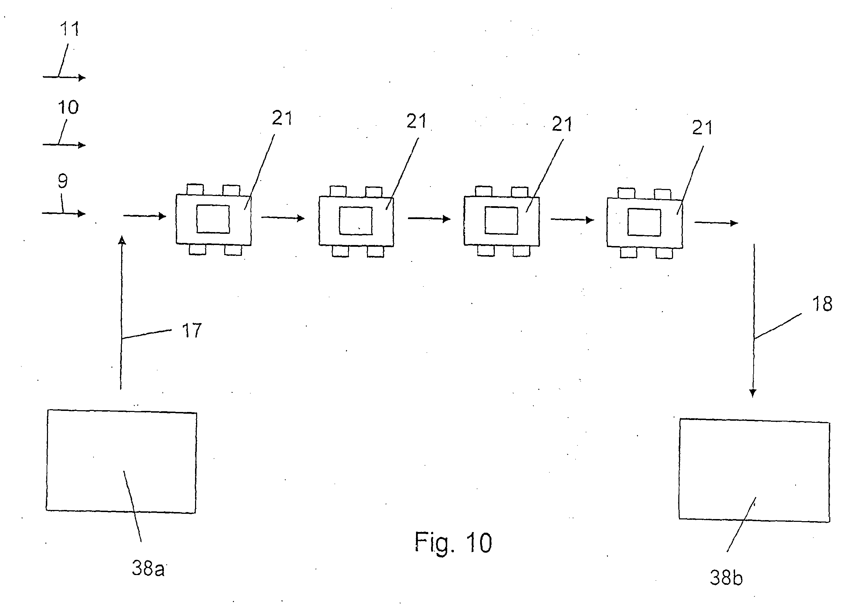

Die Figur 10 zeigt schematisiert, dass es auch möglich ist, dass in einer Regalebene 9 oder 10 oder 11 eine Vielzahl von Transportrobotern verfahrbar angeordnet sind, die bevorzugt in der gleichen Richtung schwarmartig die jeweils in der Regalebene angeordneten Fahrgassen 2-5 befahren.

So gibt es die Möglichkeit, dass in einer Fahrgasse 2-5 in einer einzigen Regalebene 9 oder 10 oder 11 eine Vielzahl von in kurzem Abstand hintereinander fahrenden Transportrobotern angeordnet sind, wie dies die Figur 10 zeigt.

Ebenso ist vorgesehen, dass nicht nur eine einzige Fahrgasse in der jeweiligen Regalebene 9 mit einer Vielzahl von Transportrobotern 21 befahrbar ist, sondern dass die auch parallel nebeneinander in den Regalebenen 9-16 angeordneten Fahrgassen 2-5 von einer Vielzahl von Transportrobotern 21 befahrbar sind.

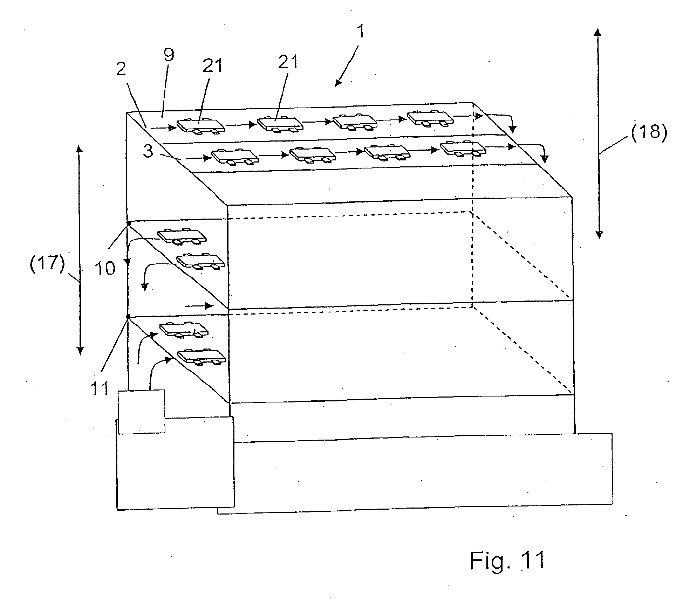

Dies ist in der Darstellung nach Figur 11 schematisiert angegeben, wo erkennbar ist, dass in den Regalebenen 9, 10, 11 eine Anzahl von Fahrgassen 2, 3 vorgesehen sind und in jeder Fahrgasse in kurzem Abstand hintereinander angeordnete Transportroboter 21 unabhängig voneinander gesteuert gemeinsam verfahrbar sind.

Die in diesen Fahrgassen 2, 3 jeweils in einer Regalebene 9, 10, 11 verfahrbaren Transportroboter haben autonome Intelligenz und steuern ihren Abstand selbst, um Kollisionen zu vermeiden. Ferner haben sie eine autonome Steuerung in der Weise, dass sie nur an bestimmten Befehlsaufnahmestellen ihre Befehle aufnehmen und einspeichern, wobei dies über Funk erfolgt.

Auf diese Weise wird sichergestellt, dass es bei jedem Transportroboter 21, der in der gleichen Fahrgasse 2 oder 3 oder 4 mit anderen Transportrobotern verfährt, nicht zu Kollisionen kommt.

In Figur 11 ist im Übrigen noch gezeichnet, dass in der oberen Regalebene 9 alle Transportroboter von links nach rechts fahren und dann in Richtung auf den rechten Liftturm 18 ihre Waren abgeben, während in der darunter liegenden Regalebene 10 die dort angeordneten Transportroboter 21 von rechts nach links fahren und ihre aufgeladene Ware (Transportbehälter 29) an dem linken Liftturm 10 abladen.

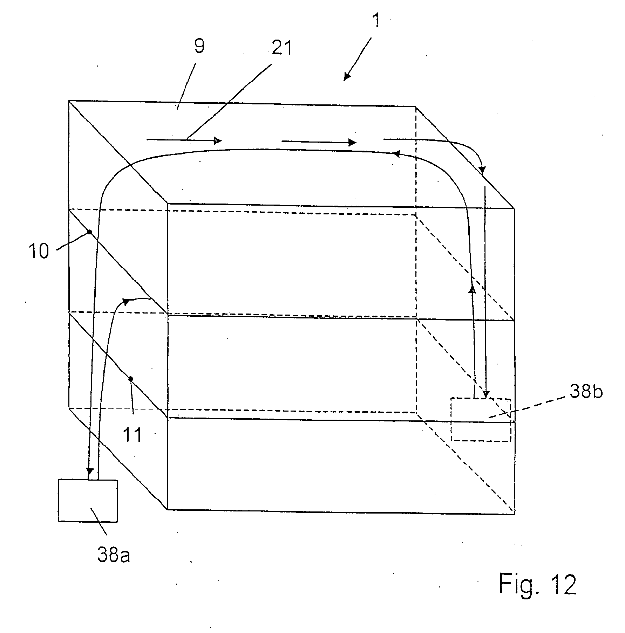

Die Figur 12 zeigt schematisiert, dass es ferner möglich ist, ausgehend von z. B. der linken Übergabestation mit dem linken Liftturm 17 einen gegenläufigen Betrieb aufzunehmen, was bedeutet, dass in der oberen Ebene 9 der dort angeordnete Transportroboter 21 von links nach rechts fährt, auf der rechten Seite zur Übergabestation 38b mit dem Lift 18 gebracht wird, dort seine Ware aufnimmt und eine darunter liegende Regalebene 10 nachfolgend befährt und von dort aus zu der linksseitigen Übergabestation 38 mit dem linken Liftturm 17 gebracht wird und von dort wiederum (von der Übergabestation 38a) die darunter liegende Regalebene 11 befährt.

Es ist zwar nicht lösungsnotwendig, dass ein solches Wechselspiel stattfindet, jedoch wird es bevorzugt, wenn zur Vereinfachung der Steuerung jeweils vorgesehen ist, dass jede Regalebene mit den dort angeordneten parallelen Fahrgassen immer nur in eine Richtung befahren wird und die darunter liegende Regalebene in der Gegenrichtung und so fort.

Selbstverständlich ist es jederzeit möglich, wie in Figur 9 angedeutet, dass im Bereich einer Fahrgasse auch kurzzeitig die Fahrtrichtung gewechselt wird, wie dies in Figur 9 anhand der Transportrichtungen 40, 41 im unteren Zweig bezüglich der Regalebene 10 dargestellt wurde.

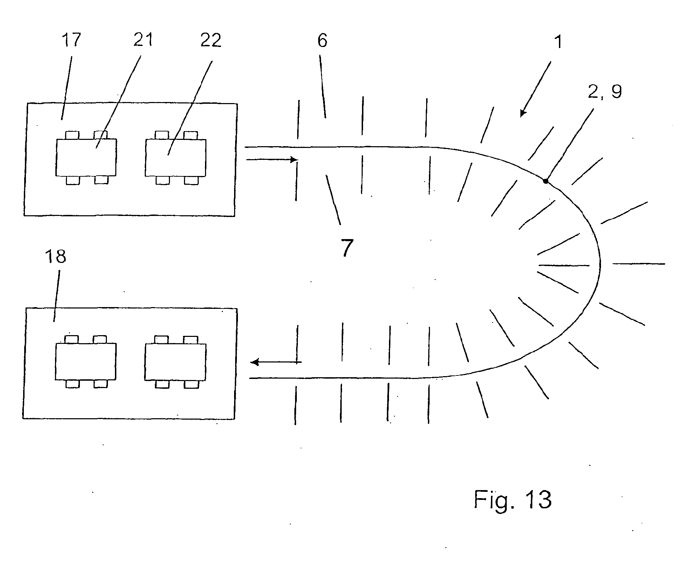

Die Figur 13 zeigt als weiteres Ausführungsbeispiel, dass es nicht lösungsnotwendig ist, die Lifttürme 17 mit dem dort angeordneten Hubförderen jeweils links und rechtsseitig des Materiallagers 1 anzuordnen.

In Figur 13 ist das Materiallager 1 um 180 ° umgebogen, d. h. die Eingangs- und die Ausgangsseite des Materiallagers 1 liegt auf der gleichen Seite und deshalb sind die Lifttürme 17, 18 mit den dort angeordneten Hubförderen auch auf der gleichen Seite angeordnet.

Es ist lediglich schematisiert eine einzige Regalebene 9 mit einer einzigen Fahrgasse 2 und entsprechenden Regalplätzen 6, 7 dargestellt, wobei es sich von selbst versteht, dass die dreidimensionale Anordnung, wie in Figur 12 gezeigt, auch bei dieser Ausführungsform 13 gegeben ist.

Die Transportroboter bekommen ihre Fahraufträge über Funk, und kommunizieren auch untereinander über Funk- oder Infrarotverbindungen. Über jeweils in dem Transportroboter angeordneten Abstandsrezeptoren halten sie ihren Abstand von dem jeweils benachbarten Transportroboter, der in der gleichen Richtung fährt. Die hier dargestellten Be- und Entladegeräte können beliebiger Art sein. Sie können entweder auf dem jeweiligen Transportroboter fest angeordnet sein oder sie können am Materiallager oder am Liftturm oder an sonstigen Stellen ortsfest angeordnet sein.

Nach der Erfindung wird eine hohe Umschlaggeschwindigkeit erreicht. Beim Stand der Technik wird hingegen nur lediglich ein Doppelspiel von 120 Behältern pro Stunde pro Fahrgasse und Regalebene erreicht. Dies bedeutet, dass in einer bestimmten Fahrgasse in einer einzigen Regalebene pro Stunde lediglich 120 Behälter hinein- und 120 herausgefordert werden können.

Hier setzt das überlegene Verfahren der Erfindung ein, welches vorsieht, dass pro Fahrgasse 400 Doppelspiele erreicht werden, d. h. fast die vierfache Förderleistung als beim Stand der Technik bekannt. Dies gilt auch für einen Stand der Technik wie er in der DE 10 2007 010 191 A2 in der Beschreibungsanleitung gewürdigt wurde.

Ein Transportroboter nach der Erfindung hat eine Fahrgeschwindigkeit von etwa 2 Meter pro Sekunde und der Hubförderer hat eine Leistung von etwa 3 Meter pro Sekunde.

Der Transportroboter hat eine Ladefläche von etwa 600 x 800 Millimeter und kann Kisten und Transportbehälter im Bereich einer Kistenfläche von z.B. 400 x 600 Millimeter befördern.

### Zeichnungslegende

- 1.: Materiallager
- 2.: Fahrgasse
- 3.: Fahrgasse
- 4.: Fahrgasse
- 5.: Fahrgasse
- 6.: Regalplatz
- 7.: Regalplatz
- 8.: Regalplatz
- 9.: Regalebene
- 10.: Regalebene
- 11.: Regalebene
- 12.: Regalebene
- 13.: Regelebene
- 14.: Regelebene
- 15.: Regelebene
- 16.: Regelebene
- 17.: Liftturm
- 18.: Liftturm
- 19.: Hubsäule
- 20.: Hubplattform
- 21.: Transportroboter
- 22.: Transportroboter
- 23.: Transportroboter
- 24.: Transportroboter
- 25.: Pfeilrichtung
- 26.: Transportroboter
- 27.: Transportroboter
- 28.: Längsförderer
- 28a.: Längsförderer
- 28b.: Längsförderer
- 29.: Transportbehälter
- 30.: Pfeilrichtung
- 31.: Fahrschiene
- 32.: Fahrebene (1 von 9)
- 33.: Fahrebene
- 34.: Fahrebene
- 35.: Fahrebene
- 36.: Fahrebene
- 37.: Pfeilrichtung
- 38.: Übergabestation
- 39.: Pfeilrichtung
- 40.: Transportvorrichtung
- 41.: Transportvorrichtung
- 42.: Pfeilrichtung

## Patentansprüche

1. Verfahren zur Steuerung von schienengebundenen Transportrobotern (21-24, 26-28) in einem Materiallager (1), wobei das Materiallager (1) vertikal übereinander angeordnete und zueinander parallele Regalebenen (9-16) enthält, in denen jeweils Fahrgassen (2-5) mit zugeordneten Regalplätzen (6-8)für die dort verfahren Transportroboter angeordnet sind , wobei an einer Stirnseite des Materiallagers (1) mindestens ein alle Regalebenen (9-16) überspannender Liftturm (17,18) angeordnet ist, auf dem die Transportroboter (21-24, 26-28) im beladenen und unbeladenen Zustand auf die verschiedenen Regalebenen (9-16) beförderbar sind, **dadurch gekennzeichnet, dass** jeweils eingangs- und ausgangsseitig des Materiallagers (1) ein Liftturm (17, 18) angeordnet ist und mindestens ein Transportroboter (21-24, 26-28) stets in einer Fahrtrichtung (40, 41) entweder zu dem einen oder anderen stirnseitig angeordneten Liftturm (17, 18) fährt und danach für einen definierten Zeitraum, die Fahrtrichtung (40, 41) für den mindestens einen Transportroboter (21-24, 26-28) in der Fahrgasse (2-5) gewechselt wird.

2. Verfahren nach Anspruch 1, **dadurch gekennzeichnet, dass** bedarfsweise die Fahrtrichtung (40, 41) in der Fahrtgasse (2-5) und Regalebene (9-16) entgegengesetzt zu der vorher gewählten Fahrtrichtung gewählt wird.

3. Verfahren nach Anspruch 1 oder 2, **dadurch gekennzeichnet, dass** der Transportroboter (21-24, 26-28) die Regalebene (9-16) jeweils nur in einer Richtung (40, 41) verlässt.

4. Verfahren nach einem der Ansprüche 1 bis 3, **dadurch gekennzeichnet, dass** der Transportroboter (21-24, 26-28) nur in einer Regalebene (9-16) ablädt.

5. Verfahren nach einem der Ansprüche 1 bis 4, **dadurch gekennzeichnet, dass** der Transportroboter (21-24, 26-28) in der gleichen Regalebene (9-16) einen Transportbehälter (29) aufnimmt.

6. Verfahren nach einem der Ansprüche 1-5, **dadurch gekennzeichnet, dass** der Transportroboter (21-24, 26-28) in der Regalebene (9-16) die Fahrtrichtung (37) wechseln kann.

7. Verfahren nach einem der Ansprüche 1-6, **dadurch gekennzeichnet, dass** der Transportroboter (21-24, 26-28) in eine andere Regalebene (9-16) wechselt, falls er in der gleichen Ebene (9-16) und der gleichen Fahrgasse (2-5) nach dem Abladen keine neue Ladung (29) aufnehmen kann.

8. Verfahren nach einem der Ansprüche 1-7, **dadurch gekennzeichnet, dass** alle Transportroboter (21-24, 26-28) in die gleiche Transportrichtung (40, 41) in der gleichen Fahrgasse (2-5) fahren.

9. Verfahren nach einem der Ansprüche 1-8, **dadurch gekennzeichnet, dass** an dem Liftturm (17, 18), den der Transportroboter (21-24, 26-28) mit seiner Ladung befährt, die Aufnahme einer neuen Ladung (29) erfolgt.

10. Verfahren nach einem der Ansprüche 1-9, **dadurch gekennzeichnet, dass** jede Regalebene(9-16) als Einbahnstraße definiert wird.

11. Verfahren nach Anspruch 10, **dadurch gekennzeichnet, dass** abwechselnd die Regalebenen (9-16) einmal als links zu rechts befahrende Einbahnstraße in Fahrtrichtung (40) und andererseits als rechts zu links befahrbare Einbahnstraße in Fahrtrichtung (41) definiert werden.

12. Verfahren nach einem der Ansprüche 1-12, **dadurch gekennzeichnet, dass** das Rückwärtsfahren des Transportroboters (21-24, 26-28) in der Einbahnstraße erlaubt ist, jedoch das Verlassen der Regalebene (9-16) immer nur in Fahrtrichtung (40, 41) erfolgt.

## Claims

1. Method for controlling rail-bound transport robots (21 to 24, 26 to 28) in a material warehouse (1), wherein the material warehouse (1) contains shelf planes (9 to 16) arranged vertically one above the other and parallel to one another, in which are arranged, in each case, travelling lanes (2 to 5) with associated shelf spaces (6 to 8) for the transport robots moved there, wherein at least one lift tower (17, 18) spanning all the shelf planes (9 to 16) is arranged on an end face of the material warehouse (1), on which tower the transport robots (21 to 24, 26 to 28) can be conveyed in the loaded and unloaded state to the various shelf planes (9 to 16), **characterised in that** a lift tower (17, 18) is in each case arranged on the entry and exit side of the material warehouse (1) and at least one transport robot (21 to 24, 26 to 28) always travels in one travel direction (40, 41) either to the one or other lift tower (17, 18) arranged on the end face and thereafter, for a defined period of time, the travel direction (40, 41) for the at least one transport robot (21 to 24, 26 to 28) in the travelling lane (2 to 5) is changed.

2. Method according to claim 1, **characterised in that**, if necessary, the travelling direction (40, 41) in the travelling lane (2 to 5) and shelf plane (9 to 16) is selected to oppose the previously selected travel direction.

3. Method according to claim 1 or 2, **characterised in that** the transport robot (21 to 24, 26 to 28) leaves the shelf plane (9 to16) only in one direction (40, 41) in each case.

4. Method according to any one of claims 1 to 3, **characterised in that** the transport robot (21 to 24, 26 to 28) only unloads in one shelf plane (9 to 16).

5. Method according to any one of claims 1 to 4, **characterised in that** the transport robot (21 to 24, 26 to 28) receives a transport container (29) in the same shelf plane (9 to16).

6. Method according to any one of claims 1 to 5, **characterised in that** the transport robot (21 to 24, 26 to 28) can change the travel direction (37) in the shelf plane (9 to 16).

7. Method according to any one of claims 1 to 6, **characterised in that** the transport robot (21 to 24, 26 to 28) changes to a different shelf plane (9, 16) if it cannot receive a new load (29) in the same plane (9 to 16) and the same travelling lane (2 to 5) after unloading.

8. Method according to any one of claims 1 to 7, **characterised in that** all the transport robots (21 to 24, 26 to 28) travel in the same transport direction (40, 41) in the same travelling lane (2 to 5).

9. Method according to any one of claims 1 to 8, **characterised in that** a new load (29) is received at the lift tower (17,18), which the transport robot (21 to 24, 26 to 28) is travelling on with its load.

10. Method according to any one of claims 1 to 9, **characterised in that** each shelf plane (9 to 16) is defined as a one-way street.

11. Method according to claim 10, **characterised in that** the shelf planes (9 to 16) are alternately defined firstly as a one-way street which is to be travelled on from left to right in the travel direction (40) and, on the other hand, as a one-way street to be travelled on from right to left in the travel direction (41).

12. Method according to any one of claims 1 to 12, **characterised in that** the transport robots (21 to 24, 26 to 28) are permitted to reverse in the one-way street, but the shelf plane (9 to 16) is always left only in the travel direction (40, 41).

## Revendications

1. Procédé pour commander des robots de transport sur rails (21-24, 26-28) dans un dépôt de matériel (1), étant précisé que le dépôt de matériel (1) contient des niveaux de rayonnages (9-16) superposés et parallèles dans lesquels sont disposées des allées de circulation (2-5) avec des emplacements de rayonnages associés (6-8) pour les robots de transport qui y circulent, étant précisé qu'il est prévu sur un côté frontal du dépôt de matériel (1) au moins une tour formant ascenseur (17, 18) qui couvre tous les niveaux de rayonnages (9-16) et sur laquelle les robots de transport (21-24, 26-28), à l'état chargé et déchargé, sont aptes à être amenés jusqu'aux différentes niveaux de rayonnages (9-16), **caractérisé en ce qu'**une tour formant ascenseur (17, 18) est prévue à l'entrée et à la sortie du dépôt de matériel (1), et il y a toujours un robot de transport (21-24, 26-28) qui se déplace, dans un sens de circulation (40, 41), vers l'une ou l'autre des tours formant ascenseurs (17, 18) disposées sur les côtés frontaux, après quoi, pour une période définie, le sens de circulation (40, 41) pour le ou les robots de transport (21-24, 26-28) dans l'allée de circulation (2-5) change.

2. Procédé selon la revendication 1, **caractérisé en ce que**, au besoin, le sens de circulation (40, 41) dans l'allée de circulation (2-5) et le niveau de rayonnages (9-16) est choisi à l'opposé du sens de circulation choisi précédemment.

3. Procédé selon la revendication 1 ou 2, **caractérisé en ce que** le robot de transport (21-24, 26-28) ne sort de chaque niveau de rayonnages (9-16) que dans un sens (40, 41).

4. Procédé selon l'une des revendications 1 à 3, **caractérisé en ce que** le robot de transport (21-24 ; 26-28) ne décharge que dans un niveau de rayonnages (9-16).

5. Procédé selon l'une des revendications 1 à 4, **caractérisé en ce que** le robot de transport (21-24, 26-28) reçoit un conteneur de transport (29) dans le même niveau de rayonnages (9-16).

6. Procédé selon l'une des revendications 1 à 5, **caractérisé en ce que** le robot de transport (21-24, 26-28) peut changer de sens de circulation (37) dans le niveau de rayonnages (9-16).

7. Procédé selon l'une des revendications 1 à 6, **caractérisé en ce que** le robot de transport (21-24, 26-28) passe à un autre niveau de rayonnages (9-16) au cas où après le déchargement, il ne peut pas recevoir de nouveau chargement (29) dans le même niveau (9-16) et dans la même allée de circulation (2-5).

8. Procédé selon l'une des revendications 1 à 7, **caractérisé en ce que** tous les robots de transport (21-24, 26-28) circulent dans le même sens de transport (40, 41) dans une même allée de circulation (2-5).

9. Procédé selon l'une des revendications 1 à 8, **caractérisé en ce que** c'est sur la tour formant ascenseur (17, 18) qu'emprunte le robot de transport (21-24, 26-28) avec son chargement qu'a lieu la réception d'un nouveau chargement (29).

10. Procédé selon l'une des revendications 1 à 9, **caractérisé en ce que** chaque niveau de rayonnages (9-16) est défini comme une voie à sens unique.

11. Procédé selon la revendication 10, **caractérisé en ce que** les niveaux de rayonnages (9-16) sont définis alternativement tantôt comme une voie à sens unique à emprunter de gauche à droite, dans le sens de circulation (40), tantôt comme une voie à sens unique à emprunter de droite à gauche, dans le sens de circulation (41).

12. Procédé selon l'une des revendications 1 à 11, **caractérisé en ce que** la circulation du robot de transport (21-24, 26-28) en marche arrière est autorisée sur la voie à sens unique, mais la sortie du niveau de rayonnages (9-16) se fait toujours dans un seul sens de circulation (40, 41).
